# EUROPEAN PATENT SPECIFICATION

(11) **EP 1 485 977 B1**
(45) Date of publication and mention of the grant of the patent: **24.07.2013**
(21) Application number: 03745034.3
(22) Date of filing: 21.03.2003
(51) Int. Cl.: H02B 13/025

(54) **ARC-RESISTANT SWITCHGEAR ENCLOSURE**
LICHTBOGENWIDERSTANDSFÄHIGE KAPSELUNG FÜR SCHALTANLAGE
ENCEINTE POUR APPAREILLAGE DE COMMUTATION RESISTANT AUX ARCS

(30) Priority: 21.03.2002 NL 1020224
(43) Date of publication of application: 15.12.2004
(73) Proprietor: Eaton Industries (Netherlands) B.V., 7559 SC Hengelo (NL)
(72) Inventor: LAMMERS, Arend, Jan, Willem, NL-7558 TV Hengelo (NL)
(74) Representative: Nederlandsch Octrooibureau
(86) International application number: PCT/NL2003/000216
(87) International publication number: WO 2003/081738

(56) References cited:
- DE-A- 2 625 510
- DE-U- 7 232 011
- DE-U- 8 901 423
- US-A- 3 911 937

## Description

The present invention relates to an arc-resistant box for a switching system, in which there are switching elements, such as a switch, a disconnector, and a plurality of contacts for the switching system, the arc-resistant box comprising a surrounding casing having a plurality of electrically conductive plate parts and a protective layer for protecting the arc-resistant box from arcs which occur in the box. Arcs of this type (also known as sparks or flashovers) may occur as a result of a fault in the switching system, such as a short circuit. Sparks may develop between voltage-carrying parts of different potentials or from a voltage-carrying conductor or contact of the switching system to the conductive box, which is normally at ground potential. These sparks develop a huge quantity of energy on account of the combination of high voltages and high currents occurring, and without protective measures, the box of the switching system could be seriously damaged, possibly with serious consequences for the area surrounding the box, and in particular people located in its vicinity.

Swiss patent CH 649 872 A5 discloses a protective layer for current- or voltage-carrying parts of electrical installations. The protective layer comprises a material which comprises synthetic resin, hardener and fillers, the synthetic resin being an endothermic, highly reactive, low-viscosity and cold-hardening synthetic resin and the fillers containing bound water. If a short-circuit arc or spark comes into contact with the layer, the layer will absorb the heat which has evolved as a result of the material decomposing and will thereby protect the electrical installation. A layer of this type must be applied to the inner side of the box and must be completely continuous: even a tiny opening could be a possible point of attraction for the formation of an arc. Furthermore, a layer of this type is expensive to apply in a switching system.

Swiss patent CH 598 705 A5 discloses a sandwich panel comprising two layers of conductive material and a fire-retardant layer between them which is used to protect electrical switching installations from the consequences of arcs. If an arc is formed in the installation and makes contact with the sandwich panel, a hole will be burnt into the conductive layer. Since there is an insulating layer beneath this conductive layer, the arc is, as it were, pushed away along the conductive plate, with the result that it is always a new section of the fire-retardant layer which is exposed to the arc discharge. In this case too, the protective layer has to cover the entire inner side of the box. Furthermore, a sandwich layer of this type is expensive to produce and process.

The publication DE-U-72 32 011 discloses a fire protection plate, which protects against the consequences of an arc inside an enclosure by attracting the arc to the conductive fire protection plate. The composition of the protection plate is such that the material expands and releases water content to extinguish the arc.

The publication DE-U-89 01 423 describes features of plates inside an enclosure, which are aimed at protecting against the effects of a fire inside the enclosure, such as heating of the external surface of the enclosure.

It is an object of the present invention to provide an arc-resistant box which is able to withstand the occurrence of arcs caused by faults in a switching system and protects the area surrounding the box from dangerous situations.

The invention is defined by the features of independent claim 1. Further embodiments are defined in the dependent claims.

If a protective layer is applied only at a plate part which shields a region which is to be protected lying outside the box, an arc is not prevented from forming in the box, but it is ensured that the region which is being shielded is not exposed to any harmful conditions which may occur should the box be burnt through, for example a discharge of very hot gases or an explosion.

It has been found that an arc which has formed as a result of a fault in a switching system generates very large amounts of energy within a very short time. An arc will generally last for no longer than about one second, after which external means ensure that the arc is extinguished (for example using external switches). The pressure inside the box increases exponentially primarily in the first 0.1 to 0.15 sec (values of 2.5 atm have been measured). Blow-off protection means which are generally used in boxes for switching systems dissipate the pressure via a safe route, with the result that in the period which remains the arc which is present will only cause an excess pressure of approximately 35 mbar. Nevertheless, on account of the very high temperature (up to3000 C), this excess pressure can still lead to serious consequences if the box fails (for example as a result of a hole being burnt into the conductive plate parts).

In a first embodiment, the protective layer is placed against the outer side of the box. If a hole is formed in a plate part which shields a region which is to be protected outside the box as a result of the action of an arc, a certain time will generally be required for this hole to form, and this time is usually (depending on the choice and thickness of material for the box) sufficient to reduce the pressure inside the box to a slight excess pressure. The protective layer will then retain the hot gases seeking to flow out of the box as a result of the (slight) excess pressure to a sufficient extent to protect the area. The protective layer must be electrically insulating in order to prevent the arc from burning a hole in it. Furthermore, the protective layer is preferably made from a heat-resistant material, for example a thermosetting material. An example used is a protective layer made from polyester glass with a thickness of 3 mm which offered sufficient protection throughout the existence of the arc (one second). If sufficient measures are taken to prevent softening under the action of moisture, it is even possible for a hard sheet of cardboard to be used as the protective layer.

In a further embodiment of the present invention, the protective layer is applied to the inner side of the box. If the protective layer bears directly against the at least one plate part which is shielding the area outside the box which is to be protected, an arc will be prevented from coming into contact with the plate part in question: it will search for another conductor or a more conductive part of the box (at ground potential) in order to find a conductive route. In this case, although a hole may be burnt in another plate part of the box, this will be directed toward a region where in principle it causes much less danger or even no danger whatsoever. The material used for the protective layer may be the same as in the embodiment described above.

In yet another embodiment, the protective layer is designed as a plate which is positioned a certain distance from the at least one plate part. On the outer side, this still offers sufficient protection against the discharge of hot gases after the at least one plate part has been burnt through, since the arc is directed toward areas which do not present any danger. When positioned on the inner side, it offers the same benefits as the abovementioned embodiment. However, in this case an additional benefit may arise if the protective plate is positioned in the box in such a manner (for example virtually parallel to a side plate of the box, perpendicular to the top side/underside) that separation is effected from air at a different temperature. This results, as it were, in a type of stack forming in the box, which has the effect that the air starts to circulate inside the box. In normal operation, there are a number of what are known as hot spots in the box with a switching system, where additional heat is generated, for example as a result of the currents flowing through a conductor or contact. If the air in the box is stationary, there is poor dissipation of heat to the exterior of the box. In general, it is a requirement that the components in the box should not become hotter than 65°C or 75°C above the ambient temperature. Positioning the protective layer in the box at a certain distance from the at least one plate part, (for example a few centimetres) causes the air inside the box to circulate, so that the heat is transferred from the hot spots to the circulating air and, from there, to the box itself, which can then dissipate the heat to the environment. This results in an additional cooling effect in the box, without having to use a fan or other moving components, resulting in the temperature being reduced by 5 to 7 degrees.

The present invention will be explained below using a number of exemplary embodiments with reference to the appended drawings, in which:
Fig. 1 shows a simplified cross-sectional view of a switching system according to one embodiment of the present invention;
Fig. 2 diagrammatically depicts a first embodiment of the present invention;
Fig. 3 diagrammatically depicts a second embodiment of the present invention; and
Fig. 4 diagrammatically depicts a third embodiment of the present invention.

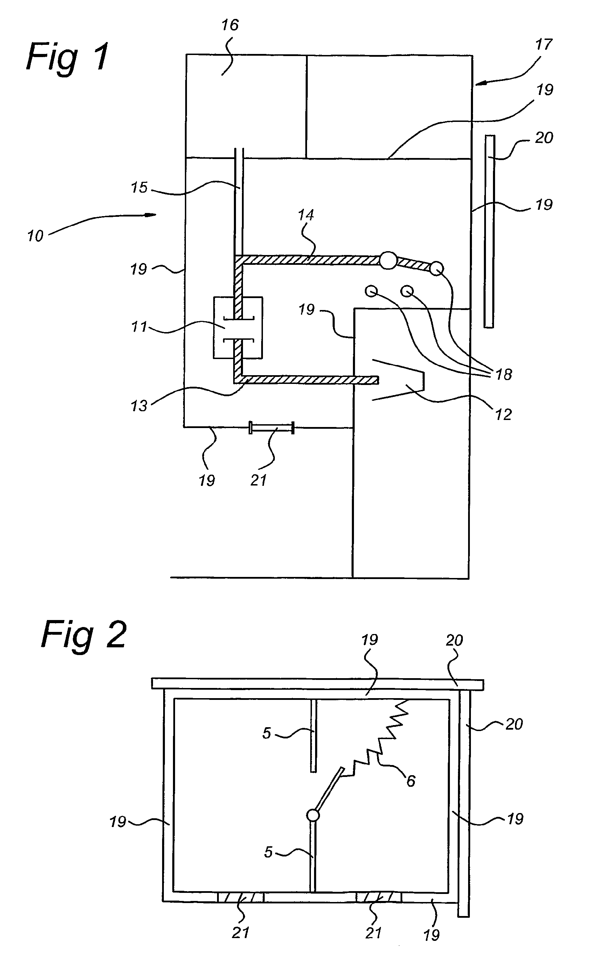

The arc-resistant box according to the present invention can be used in a switching system as shown in simplified form, in a cross-sectional view in Fig. 1. The switching system 10 comprises a switch 11, such as a vacuum switch, which is able to connect a conductor 13 to a further conductor 14. The conductor 13 is operatively connected via a connection 12 to a power supply line (not shown). The conductor 14 then connects the switch 11 to one of the connection rails 18 which run perpendicular to the plane of the drawings. In a standard switching system 10, there is also a disconnector in the conductor 14, but this is of no importance with regard to the explanation of the present invention and has therefore been omitted from the drawing for the sake of clarity. The switch 11 is actuated by a drive rod 15 with the aid of a drive mechanism 16. The switching system 10 is also provided with an operating panel 17. The voltage-carrying parts of the switching system 10 (such as switch 11, conductors 13, 14, connection rails 18) are surrounded by a box which comprises a number of plate parts 19 made from a conductive material which in normal use is held at ground potential. The drawing shown in Fig. 1 presents six plate parts 19, but obviously there are also plate parts 19 parallel to the plane of the drawing, so that a completely closed box is formed. In one or more of the plate parts 19 there may be blow-off holes 21 which, in the event of a short circuit, discharge any excess pressure by a safe route, in the case illustrated to the rear side and underside of the switching system 10.

The cross-sectional view shown in Fig. 1 shows one compartment of the switching system 10. In practice, the switching system 10 comprises a number of compartments positioned next to one another as shown in Fig. 1, the connection rails 18 running through each compartment and it being possible for the switching of the conductor 14 to connect any of the connection rails 18 to one of the connection connections 12. Operation of the switch panel as a whole then takes place at the front of the switching system 10 via the operating panel 17.

It is possible that a fault may occur in the compartment of the switching system 10 surrounded by plate parts 19, with the result that an arc (electric arc) will be formed between one of the voltage-carrying parts of the switching system 10 and one of the plate parts 19 (which is at ground potential). The high voltage difference and the high current which starts to flow means that this is associated with high levels of energy being developed inside the box. The arc generally exists for approximately one second, after which external means switch off the entire switching system 10 and extinguish the arc. The formation of the arc is associated with a very rapidly rising pressure inside the box. This pressure is discharged to the outside of the box via a safe route through the blow off holes 21, with the result that the integrity of the switching system 10 continues to be ensured. Test measurements have shown that the pressure may rise to as much as 2.5 atm within 0.1 to 0.15 sec. After that, the pressure drops again quickly, but the presence of the arc means that an excess pressure of approximately 35 mbar will still be present. If the arc exists for long enough, there is a risk of material in the area of the plate part 19 which the spark meets melting as a result of the very high temperatures which are produced, so that ultimately a hole will form in the plate part 19. This will lead to very hot gases (up to 3000°C) being discharged, which can cause danger to people in the vicinity of the switching system 10.

The plate part 19 of the box on the right-hand side of the switching system 10 shown in Fig. 1 shields an area in front of the switching system 10 in which there may be people and which therefore has to be protected from the possible consequences of a fault occurring in the switching system 10.

The present invention provides very effective protection of this region by a protective plate or layer 20 of non-combustible material being arranged on the outer side of the plate part 19. Obviously, the protective layer 20 must also be electrically insulating, in order to prevent the possibility of the arc being able to burn a hole at the location where it is in contact with the protective layer 20.

Since it takes a certain time for the arc to burn a hole through the plate part 19, the protective layer 20 will only be used as protection when the pressure peak which occurs as a result of the formation of the arc has dropped again. Therefore, the protective layer 20 only has to be able to retain the hot gases at a slight excess pressure (typically 35 mbar) for the time during which the spark is still existing (less than one second). It is therefore sufficient to use a heat-resistant insulating material for the protective layer 20. Examples of such materials include thermosetting materials, such as polyester glass. Tests have shown that a polyester sheet with a thickness of 3 mm offers sufficient protection against possible hot gases which may escape as a result of the arc. If sufficient protection against softening is provided (dry shielded environment), it is even possible to use hardboard or hard cardboard sheets as protective layer 20.

Consequently, it is only necessary to fit a protective layer 20 at the locations where the arc burning through a plate part 19 presents a possible danger (primarily as a result of the discharge of hot gases). In this way, it is possible to offer sufficient protection against possible harmful effects of a fault occurring in the switching system 10 in a very inexpensive and simple way.

Figs. 2 to 4 shows a number of alternatives of the present invention. The switching system 10 is shown in highly simplified form and comprises a box which consists of conductive plate parts 19, surrounds voltage-carrying parts 5 and is provided with outlet openings 21. The plate parts 19 are generally held at ground potential. A fault in the switching system 10, for example a short circuit, may cause an arc 6 to form between voltage-carrying parts or one of the voltage-carrying parts 5 and one of the plate parts 19.

Fig. 2 shows an embodiment in which a protective layer 20 as described above is arranged on the outer side of two plate parts 19. This offers protection in the region outside the box which is shielded by the two plate parts 19 provided with a protective layer 20.

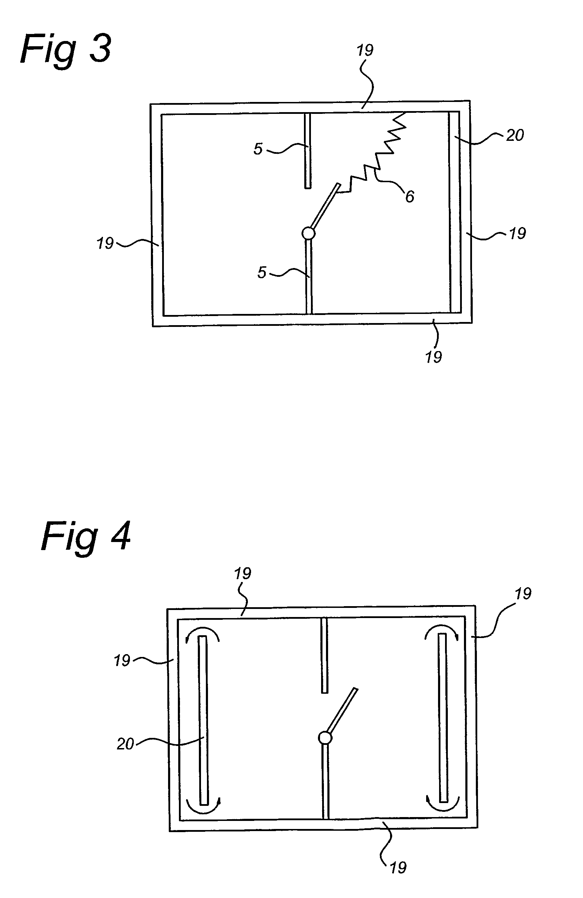

Fig. 3 shows a further variant in which a protective layer 20 is arranged on the inner side of a plate part 19. In known solutions the entire inner side of the box is provided with an insulating layer, so that the voltage-carrying parts 5 in the box do not "see" any ground potential of the plate parts 19, so that an arc to these plate parts is effectively prevented from forming. However, this has the drawback that the inner side has to be very well insulated. Even the smallest hole in the insulating layer will enable an arc to form. Particularly in the corners of the box, it is very difficult to obtain a continuous insulating layer. In the embodiment of the invention as shown in Fig. 3, a protective layer 20 is only arranged on the inner side of a plate part 19 which shields a region outside the box where a discharge of hot gases causes danger. In that case, if, following a fault in the switching system 10, an arc forms, the arc will land on one of the other plate parts 19. However, the formation of a hole in these plate parts 19 and the subsequent discharge of hot gases does not entail any danger in the regions shielded by the corresponding plate parts 19, since there are no people in these regions.

Yet another alternative of the present invention is shown in Fig. 4. In this case, there are two protective plates 20 in the box, at a short distance (a few centimetres is enough) from the plate parts 19 which shield a region outside the box which is to be protected.

When a fault occurs in the switching system 10, these protective plates 20 offer sufficient protection to the regions outside the box which shields the associated plate parts 19. In addition, there is a highly advantageous effect during normal operation of the switching system 10. When the switching system 10 is operating, various parts (in particular the voltage-carrying parts 5) may be heated very greatly by the high current intensities which occur, resulting in the local formation of what are known as hot spots in the box. To ensure that all the components (in particular moving components) of the switching system 10 operate correctly, at the design stage it is assumed that the hot spots which occur must become no warmer than 65°C or 75°C above the ambient temperature. In a standard switching system 10, this heat is dissipated only by convection of heat via the stationary air. However, the protective plates 20 in the embodiment shown in Fig. 4 ensure that a "stack effect" will occur, with the result that the air inside the box starts to circulate, and the entire outer side of the box (all the plate parts 19) is effectively used to dissipate heat. To achieve this effect, the protective plates 20 have to lie substantially parallel to the plate parts 19, as shown, with the result that the hot air is drawn into the space between the protective layer 20 and plate part 19 of the top side, since the plate part is cooler at the underside. The protective plates 20 may also be positioned slightly obliquely with respect to the plate parts 19 in order to make it possible to achieve the same effect. In a test arrangement, the circulating air was responsible for an additional cooling effect of between 5°C and 7°C. Since no moving elements are used to circulate the air in the box, the solution shown operates very reliably and is simple and inexpensive to fit.

## Claims

1. An arc-resistant box for a switching system (10), in which there are switching elements, such as a switch (11), a disconnector, and/or a plurality of contacts of the switching system, comprising a surrounding casing with a plurality of electrically conductive plate parts (19), and a protective layer (20) to protect the arc-resistant box from arcs (6) which occur in the box, **characterized in that** at least one of the plurality of plate parts (19) forms a shield toward a region which is to be protected on the outer side of the box, the protective layer (20) has also electrically insulating properties and the protective layer (20) is only applied to the at least one plate part (19).

2. The arc-resistant box as claimed in claim 1, in which the protective layer (20) is made from heat-resistant material.

3. The arc-resistant box as claimed in claim 1 or 2, in which the protective layer (20) is made from a thermosetting material.

4. The arc-resistant box as claimed in claim 1,2 or 3, in which the protective layer (20) is made from polyester glass with a thickness of, for example, 3 mm.

5. The arc-resistant box as claimed in one of claims I to 4, in which the protective layer (20) is located on the outer side of the box.

6. The arc-resistant box as claimed in one of claims 1 to 4, in which the protective layer (20) is located on the inner side of the box.

7. The arc-resistant box as claimed in claim 5 or 6, in which the protective layer (20) is located at a predetermined distance from the at least plate part (19), substantially parallel to the at least one plate part (19).

## Patentansprüche

1. Ein lichtbogenbeständiges Gehäuse für ein Schaltsystem (10), in dem sich Schaltelemente befinden, wie ein Schalter (11), ein Trennschalter und/oder zahlreiche Kontakte des Schaltsystems, das aus einem umgebenden Gehäuse mit einer Vielzahl von leitfähigen Trägerteilen (19) sowie einer Schutzschicht (20) zum Schutz des lichtbogengeschützten Gehäuses vor in dem Gehäuse auftretenden Lichtbögen (6) besteht. Mindestens eines der zahlreichen Trägerteile (19) bildet einen Schutzschild gegenüber einem Bereich, der auf der Außenseite des Gehäuses zu schützen ist. Die Schutzschicht (20) hat auch elektrisch isolierende Eigenschaften, und mindestens eines der Trägerteile (19) verfügt über eine Schutzschicht.

2. Das lichtbogengeschützte Gehäuse, wie in Anspruch 1 gefordert, in dem die Schutzschicht (20) aus hitzebeständigem Material besteht.

3. Das lichtbogengeschützte Gehäuse, wie in Anspruch 1 oder 2 gefordert, in dem die Schutzschicht (20) aus duroplastischem Material besteht.

4. Das lichtbogengeschützte Gehäuse, wie in Anspruch 1,2 oder 3 gefordert, in dem die Schutzschicht (20) aus Polyesterglas mit einer Dicke von z. B. 3 mm besteht.

5. Das lichtbogengeschützte Gehäuse, wie in einem der Ansprüche 1 bis 4 gefordert, in dem sich die Schutzschicht (20) auf der Außenseite des Gehäuses befindet.

6. Das lichtbogengeschützte Gehäuse, wie in einem der Ansprüche 1 bis 4 gefordert, in dem sich die Schutzschicht (20) auf der Innenseite des Gehäuses befindet.

7. Das lichtbogengeschützte Gehäuse, wie in Anspruch 5 oder 6 gefordert, in dem sich die Schutzschicht (20) in einer vorgegebenen Entfernung zu dem Trägerteil (19) befindet, im Wesentlichen parallel zu mindestens einem Trägerteil (19).

## Revendications

1. Une boîte résistante aux arcs pour un système de commutation (10), comprenant des éléments de commutation, tels qu'un commutateur (11), un sectionneur et/ou une pluralité de contacts du système de commutation, dont un boîtier enveloppant avec une pluralité de pièces de plaque conductrices d'électricité (19) et une couche protectrice (20) pour protéger des arcs la boîte résistante aux arcs (6) qui sont formés dans la boîte, **caractérisé en ce qu'**au moins une pluralité des pièces de plaque (19) constitue un blindage dans une région qui doit être protégée sur le côté extérieur de la boîte, la couche protectrice (20) est également dotée de propriétés d'isolation électrique et la couche protectrice (20) est uniquement appliquée à au moins une pièce de plaque (19).

2. La boîte résistante aux arcs comme affirmé dans la revendication 1, dans laquelle la couche protectrice (20) est fabriquée dans un matériau résistant à la chaleur.

3. La boîte résistante aux arcs comme affirmé dans la revendication 1 ou 2, dans laquelle la couche protectrice (20) est fabriquée dans un matériau thermodurcissable.

4. La boîte résistante aux arcs comme affirmé dans les revendications 1, 2 ou 3, dans laquelle la couche protectrice (20) est fabriquée en verre de polyester avec une épaisseur de 3 mm, par exemple.

5. La boîte résistante aux arcs comme affermé dans une des revendications 1 à 4, dans laquelle la couche protectrice (20) est située sur le côté extérieur de la boîte.

6. La boîte résistante aux arcs comme affirmé dans une des revendications 1 à 4, dans laquelle la couche protectrice (20) est située sur lecôté intérieur de la boîte.

7. La boîte résistante aux arcs comme affirmé dans la revendication 5 ou 6, dans laquelle la couche protectrice (20) est située à une distance prédéterminée d'au moins une pièce de plaque (19), parallèle en grande partie à au moins une pièce de plaque (19).
